(19) Europäisches Patentamt
European Patent Office
Office européen des brevets

(11) EP 1 265 936 B1

(12) EUROPEAN PATENT SPECIFICATION

(45) Date of publication and mention of the grant of the patent:
**08.09.2004 Bulletin 2004/37**

(21) Application number: **99968008.5**

(22) Date of filing: **24.12.1999**

(51) Int Cl.[7]: **C08F 10/10**, C08L 23/22, C08J 3/24, B01J 20/26, C02F 1/28

(86) International application number:
**PCT/TR1999/000055**

(87) International publication number:
**WO 2001/048042 (05.07.2001 Gazette 2001/27)**

(54) **SUPERABSORBENT MATERIALS BASED ON BUTYL RUBBER PROCESS FOR MAKING SAID MATERIALS AND USE OF THEM**

SUPERABSORBIERENDE MATERIALIEN AUF BASIS VON BUTYLGUMMI, VERFAHREN ZUR HERSTELLUNG UND IHRE VERWENDUNG

MATERIAUX SUPERABSORBANTS A BASE CAOUTCHOUC BUTYLE ET UTILISATION

(84) Designated Contracting States:
**AT BE CH CY DE DK ES FI FR GB GR IE IT LI LU MC NL PT SE**
Designated Extension States:
**RO**

(43) Date of publication of application:
**18.12.2002 Bulletin 2002/51**

(73) Proprietors:
- **Sabanci Universitesi**
**81474 Tuzla-Istanbul (TR)**
- **Tubitak Marmara Arastirma Merkezi**
**41470 Gebze-Kocaeli (TR)**

(72) Inventors:
- **ERMAN, Burak**
**80630 Akatlar-Istanbul (TR)**
- **OKAY, Oguz**
**80626 Maslak-Istanbul (TR)**
- **DURMAZ, Selda, Baglarbasi Mah.**
**41700 Darica-Kocaeli (TR)**

(74) Representative: **Arkan, Selda Mine et al**
**Alfa Patent Ltd. Co.,**
**Agaciragi Sokak 7-9,**
**Pamir Apt. No. 3**
**80090 Gümüssuyu, Istanbul (TR)**

(56) References cited:
- **DATABASE WPI Week 198715, Derwent Publications Ltd., London, GB; AN 1987-103992, XP002956028 & JP 62 049 914 A (NIPPON ZEON KK) 04 March 1987**
- **DATABASE WPI Week 200009, Derwent Publications Ltd., London, GB; AN 2000-101921, XP002956029 & JP 11 342 509 A (MITSUBOSHI BELTING LTD) 14 December 1999**
- **DATABASE WPI Week 199806, Derwent Publications Ltd., London, GB; AN 1998-059227, XP002956030 & JP 9 302 045 A (NIPPON GOSEI GOMU KK) 25 November 1997**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to superabsorbent materials in the form of polymer gels based on butyl rubber, to solution and suspension crosslinking processes for the production of said superabsorbent materials and to the use of said superabsorbent materials.

Butyl rubber, which is commercially available since 1943, consists of poly(isobutylene) chains containing small amounts (about 0.5 to 3 mol %) isoprene units. The structure of butyl rubber may be represented as follows, where n is a number between 30 to 200:

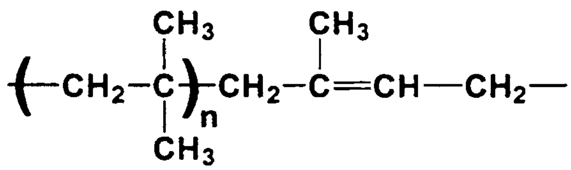

**butyl rubber**

Due to the low degree of unsaturation in butyl rubber, its vulcanization (crosslinking) requires much powerful accelerators than the natural rubber. Butyl rubber cannot be vulcanized with peroxides due to the chain scission reactions. For the preparation of heat resistant compounds, e.g., in cable insulation stocks, its vulcanization is carried out using dioximes. For exceptional heat resistant applications such as in tires, phenolic resins are used as the vulcanization agent. In general, butyl rubber can be vulcanized by three methods:

1) using elemental sulfur and an organic accelerator,
2) using polyfunctional nitroso compounds, and
3) using reactive methylolphenol resins.

Although a large number of patents and publications have been reported on the vulcanization of butyl rubber in bulk, no work has been found in the literature on its crosslinking in a solution.

Due to extensive chain scission reactions occurring in the presence of peroxide initiators such as dibenzoyl peroxide, solution crosslinking of butyl rubber by free-radicals cannot be carried out. The solution crosslinking of butyl rubber would lead to a pre-swollen crosslinked material. Such materials are called polymeric gels, which is a form of matter intermediate between a solid and a liquid. To understand the meaning of the term "gel", several definitions have been made. For example; P. H. Hermans in "Gels" Colloid Science, Vol.II, H.R. Kruyt (Ed), Elsevier Publishing Company, Inc., Amsterdam, page 483, (1949) "Gel is a system of at least two components. It exhibits mechanical properties characteristic of the solid state. The components of a gel extend continuously throughout the whole system", T. Tanaka in "Gels" Encyclopedia of Polymer Science and Engineering, Vol.7, A.Kingsberg & R. Piccininni (Eds), John Wiley & Sons, New York, USA, page 514 (1987) "Gel is a crosslinked polymer network swollen in a solvent", K. Almdal in K. Almdal, J. Dyre, J. Hvidt, O. Kramer, Polymer Gels and Networks, Vol. 1, page 5, Elsevier Science Publ., UK (1993) "A gel consists of two or more components, one of which is a liquid, present in substantial quantity. It is a soft, solid or solid-like material".

Polymeric gels consist of crosslinked long chain molecules immersed in a liquid medium. They play an important role in our lives and are nearly everywhere on earth. They are widely used for example as starting materials for ion-exchange resins, as absorbents in waste water treatment, as support carriers for immobilization of enzymes and cells in biotechnology and bioengineering as well as in the solid-state protein synthesis, as artificial organs, as catalysis in chemical engineering, as artificial snow, as artificial soils in agricultural engineering.

The application field of polymeric gels expands as their properties are further improved. The synthesis of superabsorbent hydrophilic gels is an example for the recent developments in this field. All the Unites States, European and international patents on chemical and application aspects in superabsorbent polymeric gel production have recently been reviewed by Riccardo Po in the "Journal of Macromolecular Science-Reviews in Macromolecular Chemistry and Physics, Volume C34, pages 607- 662.

Although extensive works have been made in recent years on the synthesis of hydrophilic gels called hydrogels, little has been heard on their hydrophobic parents such as those based on butyl rubber. Moreover, preparation of polymeric gels based on butyl rubber by a solution crosslinking process has not been reported before.

Applicants have surprisingly found out that butyl rubber can easily be crosslinked in an organic solution using sulfur monochloride as a crosslinking agent and that, depending on the amounts of sulfur monochloride and butyl

rubber in the crosslinking solution, hydrophobic gels with different swelling capacities can be synthesized.

The gels thus obtained can be used in a variety of applications such as in oil separating processes from aqueous solutions. For an economic oil extraction process, the gel must absorb large amounts of oil from aqueous solutions. Furthermore, the gel must be in the form of small particles for an effective oil separation - regeneration process and above all it should not sink in water. The present invention brings a solution to these problems.

The present invention relates to superabsorbent materials in the form of polymer gels based on butyl rubber. These materials are hydrophobic, float on water and have a swelling capacity up to 100 g of organic solvent per gram of dry material and they are in the form of membranes, rods or beads. When they are in the form of mono-disperse, spherical gel beads they are in the size range of 0.1 to 2 mm in diameter.

The present invention relates also to suspension crosslinking process for the production of the above superabsorbent materials. In this process, a homogeneous solution of butyl rubber in an organic solvent is prepared under nitrogen atmosphere; Then sulfur monochloride is added into the polymer solution. This solution is added by stirring into an aqueous solution, optionally containing additives, to obtain an oil-in-water suspension. The discontinuous oil phase is crosslinked at constant stirring rate and spherical gel beads are obtained.

The present invention also relates to a solution crosslinking process for the production of superabsorbent materials. In this process, a homogeneous solution of butyl rubber in an organic solvent under nitrogen atmosphere is prepared. After addition of the crosslinking agent sulfur monochloride, polymer gels in the form of rods or membranes are obtained.

In these processes, the crosslinking is advantageously carried out at room temperature.

The butyl rubber concentration is with respect to the organic solvent at most 11w/v %, preferably between 3.5 and 10w/v %, especially 5w/v % and the sulfur monochloride concentration is with respect to butyl rubber between 0.6 and 80%, preferably between 0,6 and 5.0% and especially between 0,6 and 1.0. The stirring rate is at least 100 rpm, preferably between 200 and 700 rpm and especially 300 rpm.

The organic solvent used is a solvent with a solubility parameter close to that of butyl rubber, like chloroform, benzene, toluene, xylene, carbon tetrachloride and cyclohexane. The aqueous solution contains one or more additives chosen from the group consisting of

a) sodium chloride, potassium chloride and b) alkaline earth phosphates, carbonates and silicates, starch, gelatin, poly (vinyl alcohol); poly (acrylic acid) and its salts; poly (vinyl pyrrolidone).

The present invention also relates to the use of the above superabsorbent materials for treatment of oil containing wastewater and to the use of the superabsorbent materials coming from a wastewater treatment as a fuel.

As stated before, the solution crosslinking of butyl rubber has not been described before. It has now been discovered that sulfur monochloride is an effective crosslinking agent for butyl rubber in organic solutions. The crosslinking agent sulfur monochloride, $S_2Cl_2$, is a liquid at room temperature and soluble in the organic solvents.

It has been found that "good solvents" for butyl rubber are suitable media for the solution crosslinking process. Since the solubility parameter $\delta$ of butyl rubber is 16.5 $(MPa)^{0.5}$, solvents with solubility parameters close to this value can be used in the crosslinking process. Examples are chloroform, benzene, toluene, xylene, carbon tetrachloride, and cyclohexane with $\delta$ = 18.9, 18.8, 18.2, 18.0, 17.6, and 16.8 $(MPa)^{0.5}$, respectively (C. M. Hansen, "Solubility Parameters", ASTM Manual 17, American Society for Testing and Materials, 1995).

Addition of a small quantity of sulfur monochloride into the organic solution of butyl rubber results in a preswollen gel at room temperature. Even at butyl rubber concentrations as low as 4w/v %, crosslinking reactions are complete at room temperature within a few hours. The crosslinking agent sulfur monochloride can be used at concentrations between 0.6 and 80 v/w % with respect to butyl rubber.

The present invention is explained more specifically in the following examples and making reference to the following figures, wherein:

| | |
|---|---|
| Figure 1 | represents the weight swelling ratio of butyl rubber gels as a function of the immersion time in toluene after their synthesis at room temperature. |
| Figure 2 | represents the weight swelling ratio of butyl rubber gels as a function of the sulfur monochloride concentration used in the gel preparation. |
| Figure 3: | represents crosslinked butyl rubber beads of sizes 0.25 to 0.40 mm after their preparation by the suspension crosslinking technique at 450 rpm stirring speed. |
| Figure 4 | represents the butyl rubber beads of Figure 3 after swelling in toluene. |

Figure 5 represents crosslinked butyl rubber beads of sizes 1 to 2 mm in a dried state obtained by the suspension crosslinking technique at 300 rpm stirring speed.

EXAMPLES

In the solution crosslinking process of butyl rubber (poly (isobutylene-co-isoprene)) which leads to hydrophobic gels with high swelling capacities, the main component in the gel synthesis is butyl rubber (purchased from Exxon Chem. Co.) The butyl rubber samples Butyl 268 used in this invention contained 1.5 to 1.8mol % isoprene units,. The weight-average molecular weight and the polydispersity index of the butyl rubber samples were $3.9 \times 10^5$ g/mol and 2.5, respectively, as determined by size exclusion chromatography with polystyrene standards (Waters, Model M - 6000A).

For the present invention, sulfur monochloride was purchased from Aldrich Co. Some of the butyl rubber gel samples were prepared with sulfur monochloride synthesized from sulfur and dry chlorine gas at 50 - 80°C according to a method described by Feher (F. Feher, "Sulfur, selenium, tellurium", in Handbook of Preparative Inorganic Chemistry, Ed. G. Brauer, Vol. 1, 2nd Ed., Academic Press, NY, 1963, p. 341). The purities of both Aldrich and home made sulfur monochlorides were higher than 98 %.

The crosslinking process of butyl rubber can be conducted by either solution or suspension crosslinking techniques. By the solution crosslinking, butyl rubber is first dissolved in an organic solvent at room temperature. The polymer concentration may vary between 4 and 10 w/v %. Then, sulfur monochloride is added into the polymer solution. The crosslinking reactions proceed at room temperature and result in the formation of soft gels. The solution crosslinking reactions can be carried out in glass tubes or, between glass plates in order to obtain butyl rubber gels in the form of rods or membranes, respectively.

By the suspension crosslinking technique, an organic solution of butyl rubber containing sulfur monochloride is suspended in an aqueous phase containing additives to form a suspension of droplets and crosslinked therein at room temperature to give products in bead form having a controlled size. The suspension crosslinking reaction is carried out under nitrogen atmosphere in reactors, fitted with a mechanical stirrer, nitrogen inlet, and outlet. The amount and the type of the additives as well as the stirring speed during the crosslinking process are varied depending on the required size of the beads.

After the preparation of the gels, they are left in an excess of toluene for at least two weeks. During this period, the post crosslinking reactions take place by the attack of pendant sulfur chloride groups to the internal vinyl groups on butyl rubber. After this period, the amount of uncrosslinked polymer, i.e., the sol fraction is less than 2% indicating the high crosslinking efficiency of sulfur monochloride.

The swelling capacity of the gels in the form of rods and membranes was measured in toluene by the gravimetric technique. For this purpose, the gel samples equilibrium swollen in toluene were weighed on an electronic balance (Sartorius BA 310 S). The weight swelling ratio $q_w$ was calculated as

$$q_w = \left(\frac{\text{mass of the equilibrium swollen gel}}{\text{mass of the gel after synthesis}}\right)\left(\frac{\text{mass of the gel after synthesis}}{\text{mass of the dry gel}}\right) \quad \text{(1a)}$$

$$q_w = \left(\frac{m}{m_0}\right) q_F \quad \text{(1b)}$$

where m and $m_0$ are the masses of the equilibrium swollen gel in toluene and the gel after synthesis, respectively, and $q_F$ is the degree of swelling of the gel after preparation. $q_F$ of the gels can be determined experimentally from the masses of the gel samples after synthesis and after drying, or, can also be calculated as:

$$q_F = \frac{100\, d_1}{c} + 1 \quad \text{(1c)}$$

wherein, $d_1$ is the density of the solvent used in the crosslinking process (in g/ml) and c is the initial butyl rubber concentration in w/v % (weight/volume).

Applicants made various measurements using an initial butyl rubber concentration of c= 5w/v % and toluene

as solvent ($d_1$ = 0.867 g/ml) for the gel preparation. After 15 separate measurements, applicants found that the experimental value of $q_F$ is 18 ±4.8 is comparable to its theoretical value of 18.34 calculated using equation (1c).

The swelling capacity of the gel beads was measured by the volumetric technique. The diameters of the beads after synthesis ($D_0$) and after equilibrium swelling in toluene (D) were measured using an image analyzing system consisting of a stereo microscope (Olympus Stereomicroscope SZ), a video camera (TK 1381 EG) and Pentium 2 PC with a data analyzing software (BS-200 BAB). The volume and the weight swelling ratios of the beads ($q_v$ and $q_w$, respectively) were calculated using the following equations:

$$qv = (v_2^{0})^{-1}\ (D/D_0)^3 \qquad (2)$$

$$q_w = 1 + \frac{(q_v - 1)\ d_1}{d_p} \qquad (3)$$

where

$$v_2^{0} = c\ /\ 100 d_p \qquad (4)$$

wherein, $d_p$ is the density of butyl rubber (0.917 g/ml).

One gram of the gel produced in this invention absorbs up to about 100 g of toluene, whereas this value can be adjusted by changing the sulfur monochloride or butyl rubber concentrations used in the gel preparation.

The butyl rubber samples were purified by dissolving in toluene and then precipitating into an excess of acetone at room temperature. In the following examples the weight volume ratios are given with respect to butyl rubber.

EXAMPLES 1-4

In 100 ml toluene, 1 to 10 g butyl rubber is dissolved at room temperature (See Table 1). After bubbling nitrogen for 20 minutes, a predetermined amount of sulfur monochloride is added under stirring and the solution was transferred with a syringe:

a) into several glass tubes of 5.5 mm internal diameters and about 250 mm length, and,
b) into molds of dimensions 5x5x0.1 $cm^3$ made using two glass plates covered with Melinex sheets (Boyden Data Papers Ltd., England) and a polyethylene gasket placed between them.

After a predetermined reaction time at room temperature (22 ± 2 °C), the gels formed are cut into specimens of approximately 10 mm in length and immersed in excess toluene at room temperature for two weeks.

The initial concentrations of butyl rubber and sulfur monochloride and swelling capacities of the resulting gels in toluene at room temperature are collected in Table 1. It is seen that one gram of the gel prepared at 4% initial butyl rubber concentration absorbs about 50 g of toluene. This value decreases as the initial concentration of butyl rubber increases. No gel forms if the butyl rubber concentration in toluene is less than 4w/v %.

TABLE 1:

| Example | Butyl rubber concentration %(w/v) | $S_2Cl_2$ concentration %(v/w) | reaction time (days) | Equilibrium weight swelling ratio ($q_w$) |
|---|---|---|---|---|
| 1 | ≤ 3 | 5 | 6 days | No gel formation |
| 2 | 4 | 5 | 48 h | 49 ± 8 |
| 3 | 5 | 5 | 44 h | 29 ± 2 |
| 4 | 10 | 5 | 22 h | 20.3 ± 0.5 |

EXAMPLES 5-19

5 g butyl rubber is dissolved in 100 ml toluene at room temperature. After bubbling nitrogen for 20 minutes, different amounts of sulfur monochloride are added under rigorous stirring. Then, the solutions are transferred into

several glass tubes or into molds as described in Examples 1-4. The reaction time is set to 3 days for sulfur monochloride concentrations less than 2.5% v/w. For higher concentrations, the reactions are carried out for one day. After crosslinking reactions at room temperature (22 ± 2°C), the gels formed are cut into approximately 10 mm long specimens and immersed in excess toluene for two weeks.

During this time interval the post crosslinking reactions occur by the attack of pendant sulfur chloride groups to the internal vinyl groups on butyl rubber. This is evidenced from the decrease of the gel volume in toluene with time. The results are given in Figure 1.

In Figure 1, the equilibrium weight swelling ratios $q_w$ of the gels are plotted as a function of their immersion time in toluene after synthesis. Initial butyl rubber concentration for the gel preparation = 5w/v %. $S_2Cl_2$ concentrations are indicated in the figure.

At sulfur monochloride concentrations higher than 10% v/w, the post crosslinking reactions in toluene results in a considerable decrease in the swelling capacity of the gels. At sulfur monochloride concentrations below 10% v/w, this behavior is not visible in the swelling curves.

Figure 2 shows the swelling capacities of the gels plotted as a function of the sulfur monochloride ($S_2Cl_2$) concentration used in the gel preparation. Initial butyl rubber concentration = 5w/v %. The data points are average of at least 6 separate experiments. The error bars show the standard deviations.

The equilibrium weight swelling ratios $q_w$ of the gels are almost constant for $S_2Cl_2$ concentrations above 10%. Below this value however, $q_w$ rapidly increases and approaches 100 at $S_2Cl_2$ concentrations of 0.6 to 1.0%. A continuous gel cannot form in the reaction solution below 0.6% $S_2Cl_2$.

<u>EXAMPLES 20 - 35</u>

200 ml water containing 0.5 g bentonite, 0.2 g gelatine and 0.8 g sodium chloride is introduced into a 500 ml round bottom reactor and stirred at 450 rpm under nitrogen atmosphere for 10 min. Separately, in an Erlenmeyer flask, 5 g butyl rubber dissolved in 50 ml toluene is mixed with 1 ml sulfur monochloride and nitrogen is bubbled through the organic solution for 10 minutes. Then, the toluene solution is transferred into the reactor and the reaction is allowed to proceed for 8 hours at room temperature (22 ± 2°C) under nitrogen atmosphere.

After polymerization, the beads are separated from the water phase and washed several times, namely first with water, then with acetone and finally with toluene, always in excess amount. Then the beads are left in excess toluene for two weeks, toluene is refreshed every two days. The beads are then dried at 50°C in vacuum until constant weight. After synthesis, more than 80% of the beads are between 0.25 to 0.4 mm.

An optical micrograph of the beads taken respectively after their preparation in water and after swelling in toluene are shown in Figures 3 and 4. In order to make the beads visible under microscope, the beads have been colored with a phthalocyanine dye. Figure 5 shows the beads of sizes 1 to 2 mm in a dried state obtained at 300 rpm stirring speed.

The gel beads obtained at different initial butyl rubber and sulfur monochloride concentrations, exhibit swelling capacities comparable to those obtained by solution crosslinking experiments (See Table 1 and Figure 2).

## Claims

1. Superabsorbent materials in the form of hydrophobic polymer gels that float on water, **characterized in that** they are based on butyl rubber and have a swelling capacity up to 100 gram of a suitable organic solvent per gram of dry material.

2. Superabsorbent materials according to claim 1, **characterized in that** they are in the form of membranes, rods or beads.

3. Superabsorbent materials according to claim 1, **characterized in that** they are in the form of mono-disperse, spherical gel beads in the size range of 0.1 to 2 mm in diameter.

4. A suspension crosslinking process for the production of superabsorbent materials according to any one of claims 1 to 3, **characterized in that** a homogeneous solution of butyl rubber in an organic solvent is prepared under nitrogen atmosphere, then sulfur monochloride is added into the polymer solution, this solution is added by stirring into an aqueous solution, optionally containing additives to obtain an oil-in-water suspension and the discontinuous oil phase is crosslinked at constant stirring rate and spherical gel beads are obtained.

5. A solution crosslinking process for the production of superabsorbent materials according to any one of claims 1

and 2, **characterized in that** a homogeneous solution of butyl rubber in an organic solvent under nitrogen atmosphere is prepared, then crosslinked with sulfur monochloride and polymer gels in the form of rods and membranes are obtained.

6. Process according to any one of claims 4 or 5, **characterized in that** the crosslinking is made at room temperature.

7. Process according to any one of claims 4 to 6, **characterized in that** the butyl rubber concentration is at most 11w/v %, preferably between 3.5 and % 10 w/v, especially 5w/v %.

8. Process according to any one of claims 4 to 7, **characterized in that** the sulfur monochloride concentration is between 0.6 and 80%, preferably between 0.6 and 5.0% and especially between 0.6 and 1.0.

9. Process according to any one of claims 4 to 8, **characterized in that** the stirring rate is at least 100 rpm, preferably between 200 and 700 rpm and especial 300 rpm.

10. Process according to any one of claims 4 to 9, **characterized in that** the organic solvent is a solvent with a solubility parameter close to that of butyl rubber, like chloroform, benzene, toluene, xylene, carbon tetrachloride and cyclohexane.

11. Process according to any one of claims 4 to 10, **characterized in that** the aqueous solution contains one or more additives chosen from the group consisting of a) sodium chloride, potassium chloride and b) alkaline earth phosphates, carbonates and silicates, starch, gelatin, poly (vinyl alcohol); poly (acrylic acid), and its salts; poly (vinyl pyrrolidone).

12. Use of the superabsorbent materials according to claims 1 to 3 for treatment of oil containing wastewater.

13. Use of the superabsorbent materials coming from a waste water treatment according to claim 12 as a fuel.

**Patentansprüche**

1. Superabsorbierende Materialien in Form von hydrophoben Polymergelen, welche auf Wasser schwimmen, **dadurch gekennzeichnet, dass** sie auf Butylgummi basieren und eine Quellfähigkeit von bis zu 100 g eines geeigneten organischen Lösungsmittels pro Gramm eines Trockenmaterials aufweist.

2. Superabsorbierende Materialien gemäß Anspruch 1, **dadurch gekennzeichnet, dass** sie in Form von Membranen, Stäben oder Kügelchen vorliegen.

3. Superabsorbierende Materialien gemäß Anspruch 1, **dadurch gekennzeichnet, dass** sie in Form von monodispergierten, sphärischen Gelkügelchen vorliegen im Größenbereich von 0,1 bis 2 mm im Durchmesser.

4. Suspensionsvernetzungsverfahren für die Herstellung superabsorbierender Materialien gemäß irgendeinem der Ansprüche 1 bis 3, **dadurch gekennzeichnet, dass** eine homogene Lösung von Butylgummi in einem organischen Lösungsmittel unter Stickstoffatmosphäre vorbereitet wird, dann Schwefelmonochlorid in die Polymerlösung hinzugefügt wird, diese Lösung durch Rühren in eine wässrige Lösung hinzugefügt wird, welche optional Additive enthält, um eine Öl-in-Wasser-Suspension zu erhalten, und die diskontinuierliche Ölphase bei konstanter Rührrate vernetzt wird und sphärische Gelkügelchen erhalten werden.

5. Lösungsvernetzungsverfahren für die Herstellung superabsorbierender Materialien gemäß irgendeinem der Ansprüche 1 und 2, **dadurch gekennzeichnet, dass** eine homogene Lösung von Butylgummi in einem organischen Lösungsmittel unter Stickstoffatmosphäre vorbereitet wird, dann mit Schwefelmonochlorid vernetzt wird und Polymergele in Form von Stäben und Membranen erhalten werden.

6. Verfahren gemäß irgendeinem der Ansprüche 4 oder 5, **dadurch gekennzeichnet, dass** die Vernetzung bei Raumtemperatur durchgeführt wird.

7. Verfahren gemäß irgendeinem der Ansprüche 4 bis 6, **dadurch gekennzeichnet, dass** die Butylgummikonzentration maximal 11 Gew./Vol. %, bevorzugt zwischen 3,5 und 10 Gew.Nol. %, insbesondere 5 Gew.Nol. % ist.

**8.** Verfahren gemäß irgendeinem der Ansprüche 4 bis 7, **dadurch gekennzeichnet, dass** die Schwefelmonochloridkonzentration zwischen 0,6 und 80 %, bevorzugt zwischen 0,6 und 5,0 % und insbesondere zwischen 0,6 und 1,0 liegt.

**9.** Verfahren gemäß irgendeinem der Ansprüche 4 bis 8, **dadurch gekennzeichnet, dass** die Umrührrate zumindest 1000 U/min bevorzugt zwischen 200 und 700 U/min und insbesondere 300 U/min beträgt.

**10.** Verfahren gemäß irgendeinem der Ansprüche 4 bis 9, **dadurch gekennzeichnet, dass** das organische Lösungsmittel ein Lösungsmittel mit einem Löslichkeitsparameter nahe dem von Butylgummi ist, wie Chloroform, Benzol, Toluen, Xylen, Carbon-Tetrachlorid und Cyclohexan.

**11.** Verfahren gemäß irgendeinem der Ansprüche 4 bis 10, **dadurch gekennzeichnet, dass** die wässrige Lösung eines oder mehrere Additive enthält, ausgewählt aus der Gruppe, welche besteht aus a) Natriumchlorid, Kaliumchlorid und b) Erdalkaliphosphate, Carbonate und Silikate, Stärke, Gelatine, Poly (Vinylalkohol); Poly (Acrylsäure) und ihre Salze; Poly (Vinylpyrrolidone).

**12.** Verwendung des superabsorbierenden Materials gemäß den Ansprüchen 1 bis 3 zur Behandlung von Öl enthaltendem Abwasser.

**13.** Verwendung des superabsorbierenden Materials, welches von einer Abwasserbehandlung gemäß Anspruch 12 kommt, als Brennstoff.

## Revendications

**1.** Matériaux superabsorbants sous la forme de gels de polymères hydrophobes qui flottent sur l'eau, **caractérisés en ce qu'**ils sont à base de caoutchouc butyle et ont une capacité de gonflement jusqu'à 100 grammes d'un solvant organique approprié par gramme de matériau sec.

**2.** Matériaux superabsorbants selon la revendication 1, **caractérisés en ce qu'**ils se présentent sous la forme de membranes, de tiges ou de billes.

**3.** Matériaux superabsorbants selon la revendication 1, **caractérisés en ce qu'**ils se présentent sous la forme de billes de gel sphériques monodispersées dans la plage de tailles de 0,1 à 2 mm de diamètre.

**4.** Procédé de réticulation en suspension pour la production de matériaux superabsorbants selon l'une quelconque des revendication 1 à 3, **caractérisé en ce qu'**une solution homogène de caoutchouc butyle dans un solvant organique est préparée sous atmosphère d'azote, puis on ajoute du monochlorure de soufre dans la solution de polymère, cette solution est ajoutée sous agitation dans une solution aqueuse, contenant éventuellement des additifs, pour obtenir une suspension d'huile dans l'eau et la phase d'huile discontinue est réticulée à vitesse d'agitation constante et l'on obtient des billes de gel sphériques.

**5.** Procédé de réticulation en solution pour la production de matériaux superabsorbants selon l'une quelconque des revendications 1 et 2, **caractérisé en ce qu'**une solution homogène de caoutchouc butyle dans un solvant organique sous atmosphère d'azote est préparée, puis réticulée avec du monochlorure de soufre et l'on obtient des gels de polymère sous la forme de tiges et de membranes.

**6.** Procédé selon l'une quelconque des revendications 4 ou 5, **caractérisé en ce que** la réticulation est effectuée à température ambiante.

**7.** Procédé selon l'une quelconque des revendications 4 à 6, **caractérisé en ce que** la concentration en caoutchouc butyle est au maximum de 11% en poids/volume, de préférence de 3,5 à 10% en poids/volume, tout particulièrement de 5% en poids/volume.

**8.** Procédé selon l'une quelconque des revendications 4 à 7, **caractérisé en ce que** la concentration en monochlorure de soufre est de 0,6 à 80%, de préférence de 0,6 à 5,0%, tout particulièrement de 0,6 à 1,0%.

**9.** Procédé selon l'une quelconque des revendications 4 à 8, **caractérisé en ce que** la vitesse d'agitation est au

moins de 100 tr/mn, de préférence de 200 à 700 tr/mn, tout particulièrement de 300 tr/mn.

10. Procédé selon l'une quelconque des revendications 4 à 9, **caractérisé en ce que** le solvant organique est un solvant ayant un paramètre de solubilité proche de celui du caoutchouc butyle, comme le chloroforme, le benzène, le toluène, le xylène, le tétrachlorure de carbone et le cyclohexane.

11. Procédé selon l'une quelconque des revendications 4 à 10, **caractérisé en ce que** la solution aqueuse contient un ou plusieurs additifs choisis dans le groupe constitué a) du chlorure de sodium et du chlorure de potassium et b) de phosphates, de carbonates et de silicates alcalinoterreux, de l'amidon, de la gélatine, du poly(alcool de vinyle); d'un poly(acide acrylique) et de ses sels; ainsi que d'une polyvinylpyrrolidone.

12. Utilisation des matériaux superabsorbants selon les revendications 1 à 3 pour le traitement d'eaux usées contenant de l'huile.

13. Utilisation des matériaux superabsorbants provenant d'un traitement d'eaux usées selon la revendication 12 comme carburant.

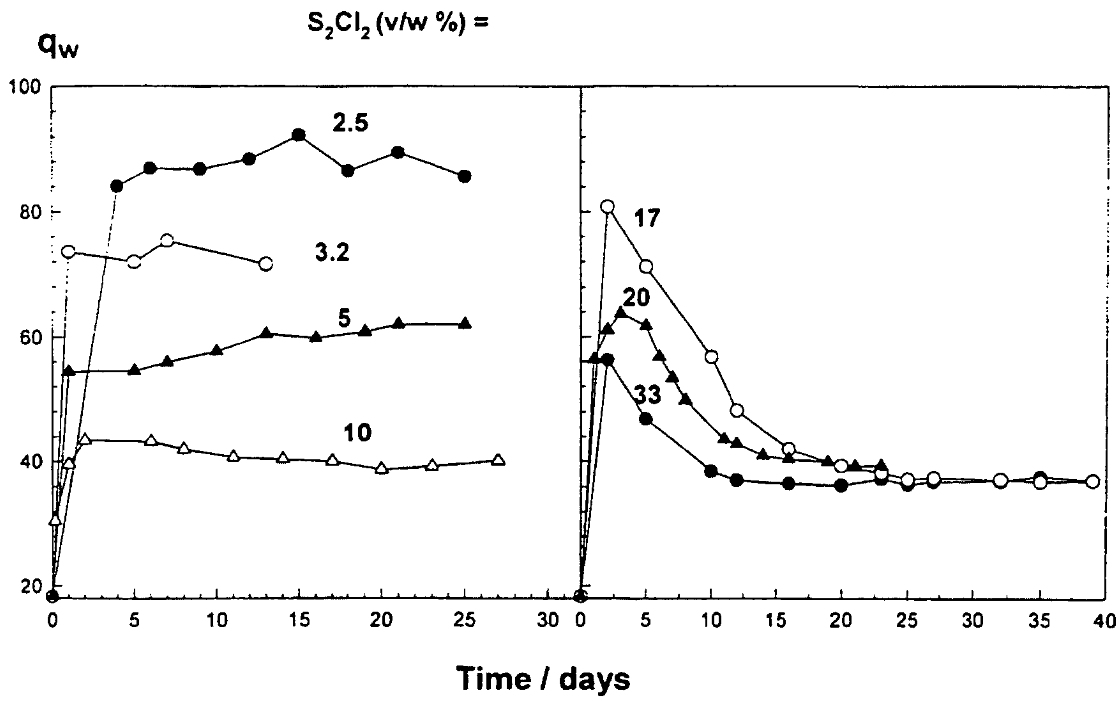
$S_2Cl_2$ (v/w %) =
$q_w$
100
80
60
40
20
2.5
3.2
5
10
17
20
33
0
5
10
15
20
25
30
0
5
10
15
20
25
30
35
40
Time / days

Fig. 1

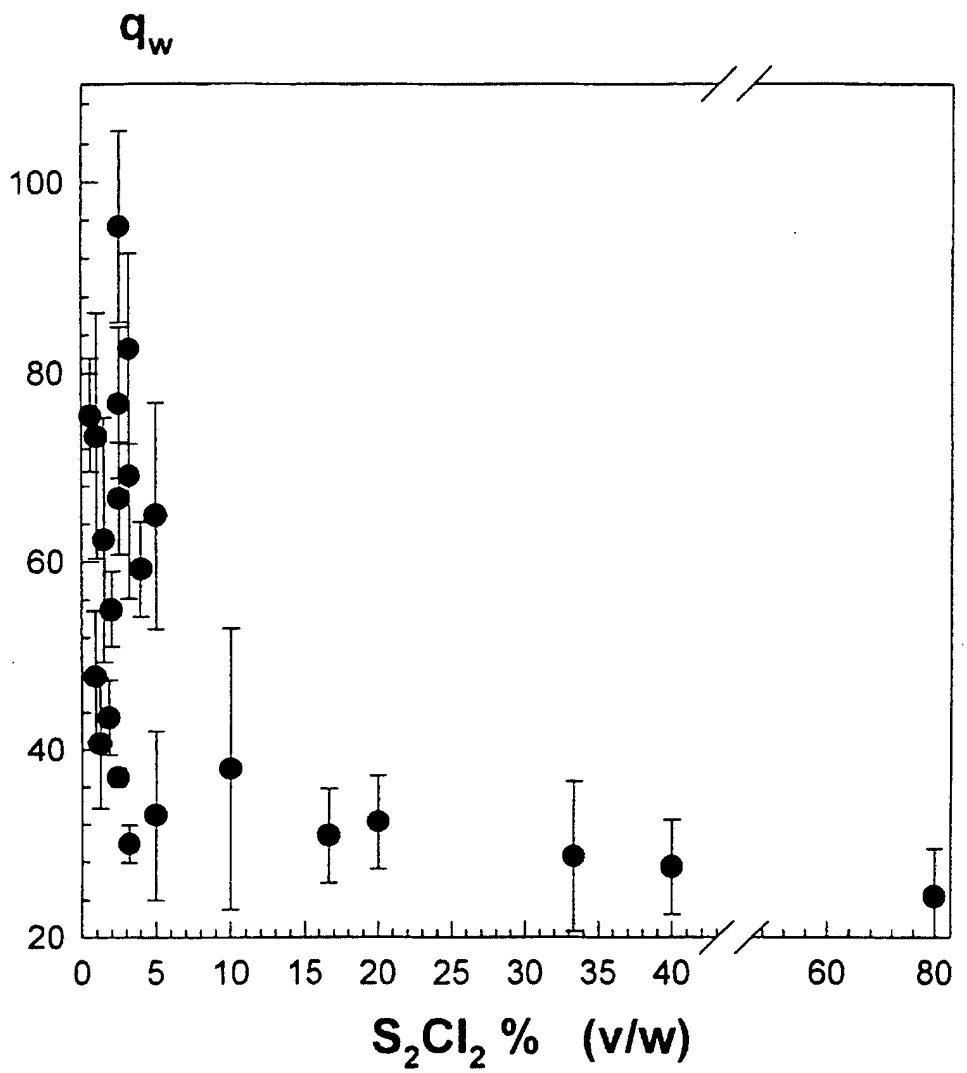
q_w
100
80
60
40
20
0
5
10
15
20
25
30
35
40
60
80
S2Cl2 % (v/w)

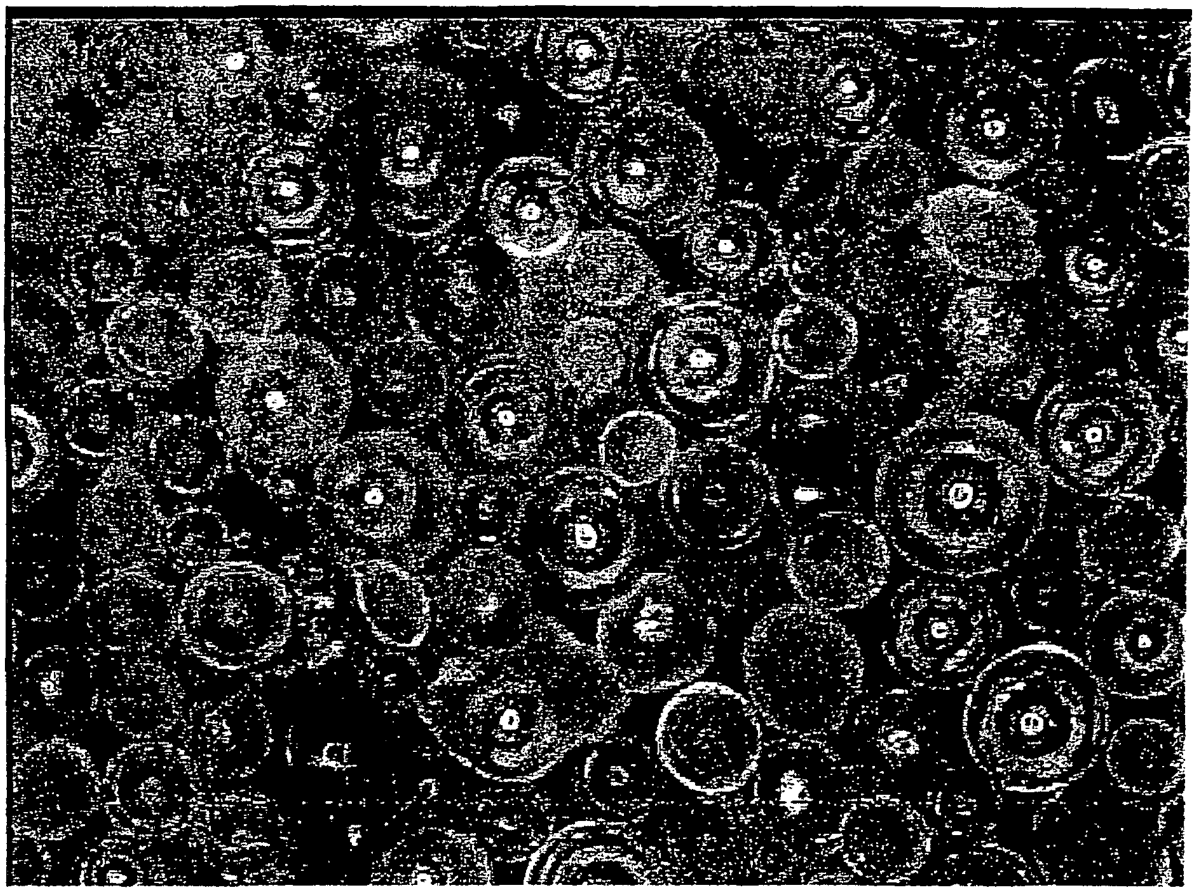

Fig.3

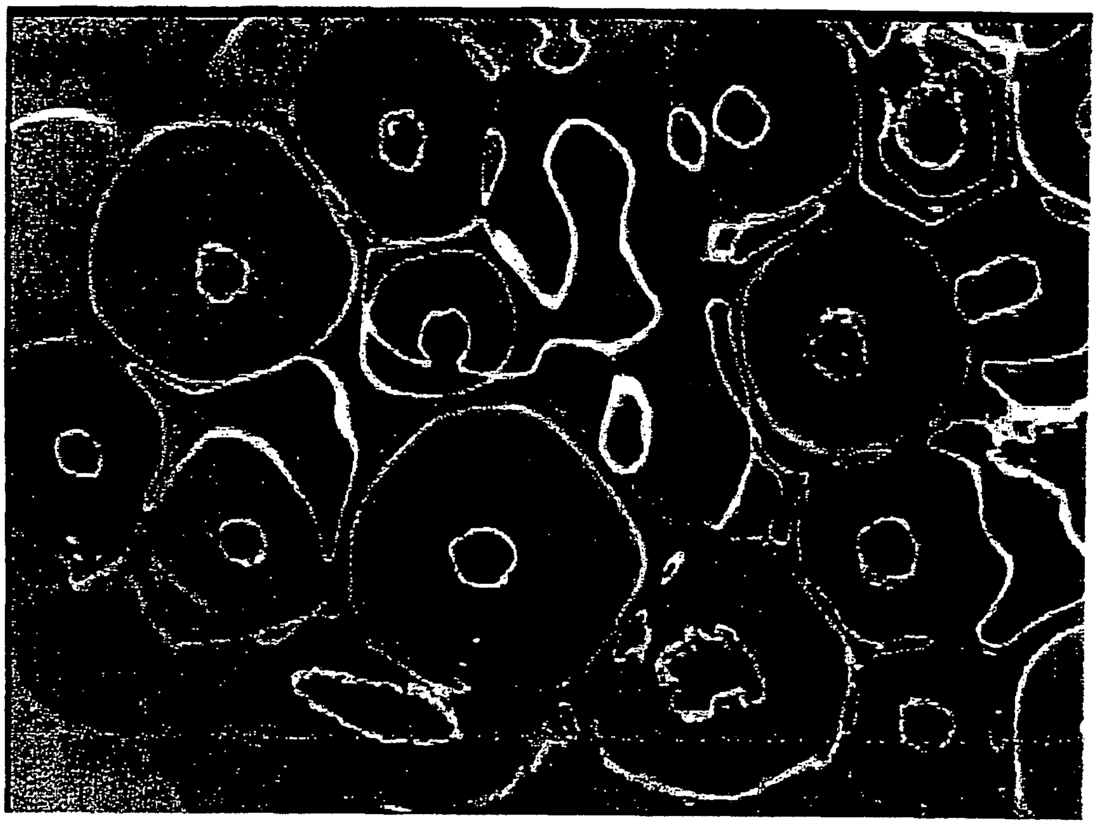

Figure 4

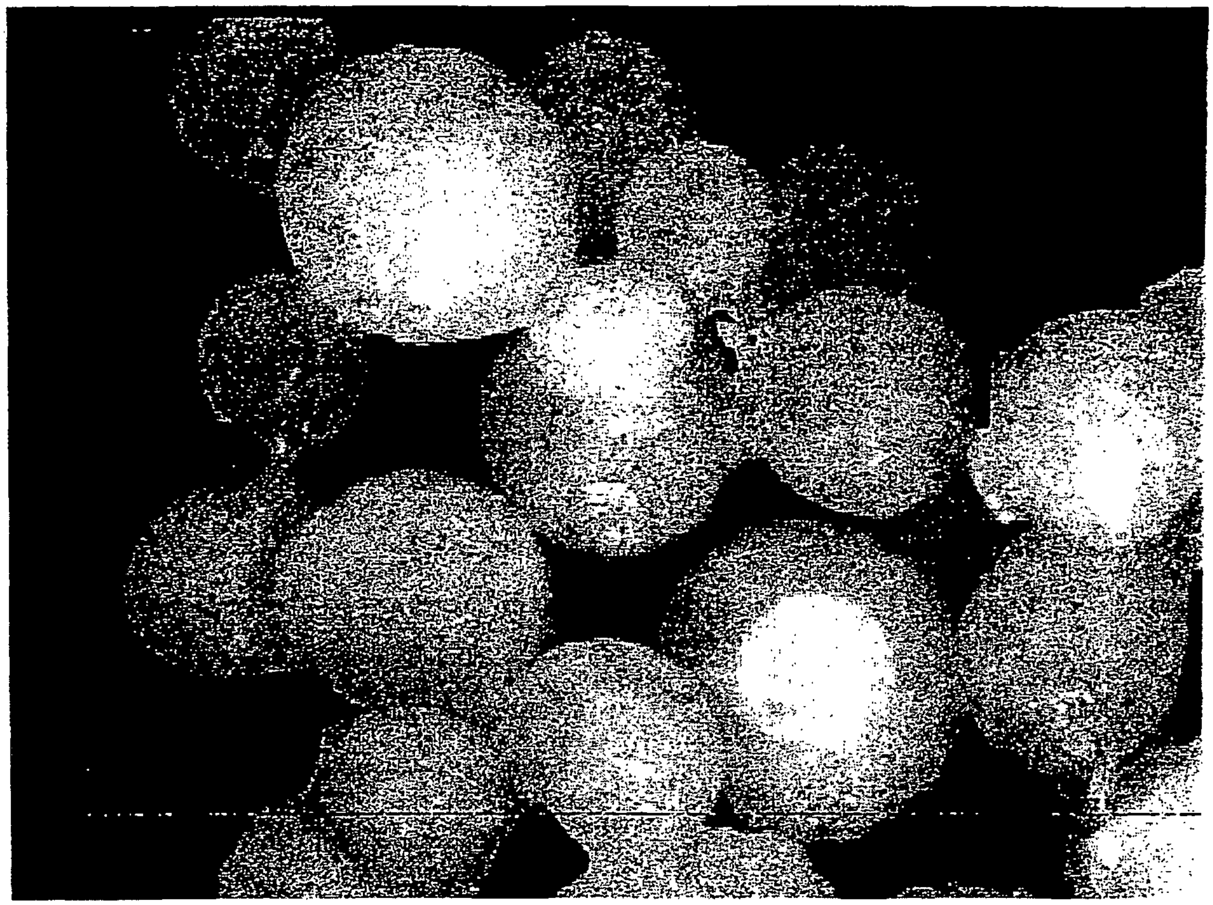

Figure 5